Europäisches Patentamt

European Patent Office

Office européen des brevets

(19)

(11) **EP 1 568 570 A2**

(12) **EUROPÄISCHE PATENTANMELDUNG**

(43) Veröffentlichungstag:
**31.08.2005 Patentblatt 2005/35**

(51) Int Cl.$^7$: **B62D 5/00**, B62D 15/02

(21) Anmeldenummer: **04025028.4**

(22) Anmeldetag: **21.10.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **28.02.2004 DE 102004009823**

(71) Anmelder: **ZF Lenksysteme GmbH
73527 Schwäbisch Gmünd (DE)**

(72) Erfinder:
• **Reinelt, Wolfgang, Dr.-Ing.
70374 Stuttgart (DE)**
• **Grossheim, Reinhard
73560 Böbingen (DE)**
• **Klier, Willy, Dr.-Ing.
73527 Schwäbisch Gmünd (DE)**

(54) **Berechnung eines Radwinkels eines Fahrzeugs**

(57)    Die Erfindung betrifft ein Verfahren zur Berechnung eines Radwinkels, insbesondere eines kurveninneren, lenkbaren Rades, eines Fahrzeugs über eine analytische Beziehung gemäß der Fahrzeuggeometrie, wobei Achsabstand, Spurweite sowie Radgeschwindigkeiten ($\omega_{vi}$, $\omega_{va}$) zur Berechnung verwendet werden.

Bezugszeichen

| | |
|---|---|
| 11 | Lenkrad |
| 12 | Überlagerungsgetriebe |
| 13 | Stellantrieb |
| 14 | Lenkgetriebe |
| 15a | Räder |
| 15b | Räder |
| 16 | Lenkgestänge |
| 21 | Lenkrad |
| 22 | Überlagerungsgetriebe |
| 23 | Stellantrieb |
| 24 | Lenkgetriebe |
| 25 | - |
| 26 | Sensoren |
| 27 | Steuergerät |
| 28 | Sensoren |
| 101 | Verbindung |
| 102 | Verbindung |
| 103 | Verbindung |
| 104 | Verbindung |

| | |
|---|---|
| $\delta_S$ | Lenkradwinkel |
| $\delta_M$ | Motorwinkel |
| $\delta_G$ | Ritzelwinkel |
| $\delta_{Fm}$ | Lenkwinkel |
| $V_X$ | Fahrzeuggeschwindigkeit |
| $i_\ddot{u}$ | mech. Übersetzung des Überlagerungsgetriebes |
| $i_L$ | mech. Übersetzung des Lenkgetriebes |
| $\delta_i$ | Winkel eines vorderen kurveninneren Rades |
| $\delta_a$ | Winkel eines vorderen kurvenäußeren Rades |
| $r_{Vi}$ | aktueller Radius der Kreisbahn eines vorderen kurveninneren Rades |
| $r_{Va}$ | aktueller Radius der Kreisbahn eines vorderen kurvenäußeren Rades |
| $r_{Hi}$ | aktueller Radius der Kreisbahn eines hinteren kurveninneren Rades |
| $r_{Ha}$ | aktueller Radius der Kreisbahn eines hinteren kurvenäußeren Rades |
| $S_{Lenk}$ | Spurweite |
| l | Radstand des Fahrzeugs. |
| $\omega_{FL}$ | Radgeschwindigkeit linkes Vorderrad |
| $\omega_{FR}$ | Radgeschwindigkeit rechtes Vorderrad |
| $\omega_{RL}$ | Radgeschwindigkeit linkes Hinterrad |
| $\omega_{RR}$ | Radgeschwindigkeit rechtes Hinterrad |

EP 1 568 570 A2

Fig. 1

**Beschreibung**

Die Erfindung betrifft ein Verfahren zur Berechnung eines Radwinkels, insbesondere eines kurveninneren lenkbaren Rades eines Fahrzeugs. Die Erfindung betrifft ebenfalls Verfahren zur Berechung der Fahrzeuggeschwindigkeit und ein Verfahren zur Plausibilisierung eines Ritzelwinkels in einer Überlagerungslenkung.

Bei aktiven Lenksystemen wie etwa aus der DE 197 51 125 A1 bekannt, werden die vom Fahrer durch ein Lenkrad aufgebrachten Lenkbewegungen, der durch einen Sensor erfasste Lenkradwinkel, mittels eines Überlagerungsgetriebes mit den Bewegungen des Stellerantriebes, dem Motorwinkel, überlagert. Die Summe dieser Winkel, der Ritzelwinkel wird über das Lenkgetriebe bzw. das Lenkgestänge an die lenkbar ausgelegten Räder zur Einstellung des Lenkwinkels weitergeleitet. Über einen speziellen Sensor kann der eingestellte Ritzelwinkel als Signal abgefragt werden. Des weiteren besteht die Notwendigkeit dieses Ritzelwinkelsignal zu überwachen bzw. zu plausibilisieren oder gegebenenfalls in einem Modell separat zu berechnen. Dies kann beispielsweise mit Hilfe der Radgeschwindigkeiten über die sogenannte Ackermann-Beziehung erfolgen, welche jedoch mithin nicht in dynamischen Fahrsituationen gilt.

Aus der DE 195 37 791 A1 ist ein Verfahren und eine Vorrichtung zur Ermittlung der Fahrgeschwindigkeit eines Kraftfahrzeugs bekannt. Dazu wird an einzelnen Rädern die Raddrehzahl erfasst und in die Fahrgeschwindigkeit umgerechnet. Außerdem wird bei gelenkten Rädern der Radwinkel über einen Lenkradwinkel und eine Lenkübersetzung mit einbezogen. Dies ist bei aktiven Lenksystemen nicht denkbar, da zusätzlich ein Motorwinkel des Stellantriebes über das Überlagerungsgetriebe zugeleitet wird und somit nicht direkt über Lenkradwinkel und Lenkübersetzung auf den Radwinkel geschlossen werden kann. Es müssten zu viele Messsignale berücksichtigt werden, welche zuvor aufwendig zu plausibilisieren wären.

Der vorliegenden Erfindung liegt daher die Aufgabe zugrunde, ein Verfahren zur Berechnung eines Radwinkels, welche mit möglichst wenig Messsignalen auskommen und zuverlässig auch in dynamischen Fahrsituationen arbeiten.

Erfindungsgemäß wird diese Aufgabe durch die Merkmale von Anspruch 1 gelöst.

Durch diese Maßnahmen wird in einfacher und vorteilhafter Weise ein Verfahren zur Berechnung eines Radwinkels eines Fahrzeugs geschaffen, welches unabhängig, allein unter Verwendung der Radgeschwindigkeiten, eine zuverlässige Berechnung ermöglicht. Mit Hilfe des somit errechneten Winkels kann auf die aktuelle Fahrzeuggeschwindigkeit in die gelenkte Richtung geschlossen werden.

Des weiteren kann durch diesen Winkel ein Ritzelwinkel eines Lenksystems unabhängig berechnet bzw. ein Ritzelwinkelsensor plausibilisiert werden.

Diese Aufgabe wird durch Anspruch 2 gelöst.

Vorteilhafte Ausgestaltungen und Weiterbildungen der Erfindung ergeben sich aus den Unteransprüchen.

Nachfolgend ist anhand der Zeichnung ein Ausführungsbeispiel der Erfindung prinzipmäßig beschrieben.

Es zeigen:

Fig. 1          ein Schema einer theoretischen stationären Kreisfahrt eines Fahrzeugs;

Fig. 2 und 3     ein Schema des Lenksystems nach dem Stand der Technik, von dem die Erfindung im Ausführungsbeispiel ausgeht.

Die Berechnung eines Winkels eines Rades wird nachfolgend beispielhaft anhand eines kurveninneren, lenkbaren Rades eines Fahrzeugs dargestellt.

Basierend auf den aktuellen Radgeschwindigkeiten werden die Radien der Kreisbahnen berechnet, die sich bei einer stationären Kreisfahrt eines Fahrzeugs ergeben würden. Es wird dann eine Beziehung zwischen der benötigten Zeit für die stationäre Kreisfahrt und den Geschwindigkeiten der beiden Vorderräder aufgestellt. Durch Einsetzen der Gleichungen ineinander ist es möglich, den Winkel des vorderen kurveninneren Rades als Funktion der beiden Vorderradgeschwindigkeiten darzustellen.

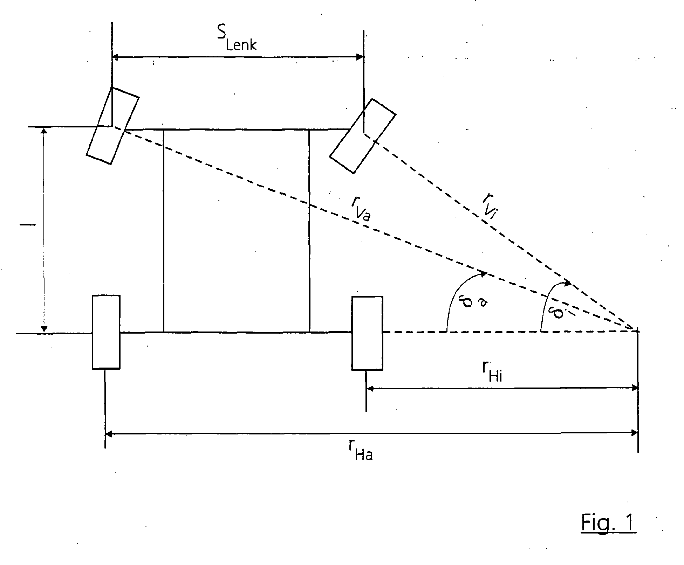

Aus Figur 1 ist eine stationäre Kreisfahrt eines Fahrzeugs ersichtlich, dabei bezeichnet:

- $\delta_i$ einen Winkel eines vorderen kurveninneren Rades;
- $\delta_a$ einen Winkel eines vorderen kurvenäußeren Rades;
- $r_{Vi}$ aktueller Radius der Kreisbahn eines vorderen kurveninneren Rades;
- $r_{Va}$ aktueller Radius der Kreisbahn eines vorderen kurvenäußeren Rades;
- $r_{Hi}$ aktueller Radius der Kreisbahn eines hinteren kurveninneren Rades;
- $r_{Ha}$ aktueller Radius der Kreisbahn eines hinteren kurvenäußeren Rades;
- $S_{Lenk}$ Spurweite;
- $I$ Radstand des Fahrzeugs; und
- $\omega_{vi,a}$ Radgeschwindigkeiten.

Aus Figur 1 lässt sich die folgende Gleichung ableiten.

$$r_{Vi} = \frac{I}{\sin \delta_i},$$

$$r_{Hi} = \cos\delta_i \cdot r_{Vi} = \frac{\cos\delta_i \cdot I}{\sin \delta_i}$$

oder:

$$r_{Va} = \sqrt{I^2 \cdot \frac{1}{\tan^2\delta_i} + 2 \cdot I \cdot S_{Lenk} \cdot \frac{1}{\tan\delta_i} + (S_{Lenk}^2 + I^2)}. \qquad (1.1)$$

Bei einer stationären Kreisfahrt berechnet sich die Geschwindigkeit der Räder aus dem Umfang der Kreise geteilt durch die benötigte Zeit. Die benötigte Zeit ist bei allen vier Rädern gleich.
Für das vordere kurveninnere Rad gilt:

$$\omega_{Vi} = \frac{2 \cdot \pi \cdot r_{Vi}}{\Delta t}. \qquad (1.2)$$

Es ist außerdem:

$$r_{Vi}^2 = \left( I^2 \cdot \left( 1 + \frac{1}{\tan^2 \delta_i} \right) \right). \qquad (1.3)$$

Quadrieren von (1.2) liefert:

$$\omega_{Vi}^2 = \frac{4 \cdot \pi^2 \cdot r_{Vi}^2}{\Delta^2 t^2}. \qquad (1.4)$$

Einsetzen von (1.3) in (1.4) liefert:

$$\omega_{Vi}^2 = \frac{4 \cdot \pi^2 \cdot I^2 \cdot \left( 1 + \frac{1}{\tan^2 \delta_i} \right)}{\Delta^2 t^2}. \qquad (1.5)$$

Für die quadrierte Geschwindigkeit des vorderen kurvenäußeren Rades gilt entsprechend:

$$\omega_{Va}^2 = \frac{4 \cdot \pi^2 \cdot \left( I^2 \cdot \frac{1}{\tan^2 \delta_i} + 2 \cdot I \cdot S_{Lenk} \cdot \frac{1}{\tan\delta_i} + \left( S_{Lenk}^2 + I^2 \right) \right)}{\Delta^2 t^2}. \qquad (1.6)$$

Umstellen von (1.6) liefert:

$$\Delta^2 t^2 = \frac{4 \cdot \pi^2 \cdot I^2 \cdot \left(1 + \dfrac{1}{\tan^2 \delta_i}\right)}{\omega_{Vi}^2} \cdot \qquad (1.7)$$

Einsetzen von (1.7) in (1.6) liefert:

$$\omega_{Va}^2 = \frac{4 \cdot \pi^2 \cdot \left(I^2 \cdot \dfrac{1}{\tan^2 \delta_i} + 2 \cdot I \cdot S_{Lenk} \cdot \dfrac{1}{\tan \delta_i} + \left(S_{Lenk}^2 + I^2\right)\right) \cdot \omega_{Vi}^2}{4 \cdot \pi^2 \cdot I^2 \cdot \left(1 + \dfrac{1}{\tan^2 \delta_i}\right)} \qquad (1.8)$$

Die Gleichung (1.8) stellt eine quadratische Gleichung dar, die nach $\dfrac{1}{\tan \delta_i}$ aufgelöst werden kann.
Die quadratische Gleichung (1.8) hat die Lösung:

$$\tan \delta_i = \frac{-I \cdot (\omega_{Vi}^2 - \omega_{Va}^2)}{S_{Lenk} \cdot \omega_{Vi}^2 + \sqrt{S_{Lenk}^2 \cdot \omega_{Vi}^2 \cdot \omega_{Va}^2 - I^2 \cdot (\omega_{Vi}^2 - \omega_{Va}^2)^2}} \qquad (1.9)$$

Eine Untersuchung der Ergebnisse liefert, dass lediglich das Vorzeichen + als Lösung physikalisch sinnvoll ist. Damit ist:

$$\tan \delta_i = \frac{-I \cdot (\omega_{Vi}^2 - \omega_{Va}^2)}{S_{Lenk} \cdot \omega_{Vi}^2 + \sqrt{S_{Lenk}^2 \cdot \omega_{Vi}^2 \cdot \omega_{Va}^2 - I^2 \cdot (\omega_{Vi}^2 - \omega_{Va}^2)^2}}$$

und schließlich:

$$\delta_i = \arctan\left(\frac{-I \cdot \left(\omega_{Vi}^2 - \omega_{Va}^2\right)}{S_{Lenk} \cdot \omega_{Vi}^2 + \sqrt{S_{Lenk}^2 \cdot \omega_{Vi}^2 \cdot \omega_{Va}^2 - I^2 \cdot \left(\omega_{Vi}^2 - \omega_{Va}^2\right)^2}}\right) \cdot \qquad (1.10)$$

Zu beachten ist nun noch, dass in der Regel das langsamere Rad das kurveninnere Rad ist. Mit der Berechung des kurveninneren Radwinkels $\delta_i$ kann über eine Kennlinie einer inversen Lenkkinematik auf den momentanen Summenwinkel, bzw. Ritzelwinkel $\delta_G$ geschlossen werden.

Somit kann in einfacher Weise ein Winkel $\delta_i$ eines kurveninneren, insbesondere lenkbaren Rades eines Fahrzeugs über eine analytische Beziehung gemäß der Fahrzeuggeometrie berechnet werden. Dabei werden Achsabstand bzw. Radstand I, Spurweite $S_{Lenk}$ sowie eine kurveninnere Radgeschwindigkeit $\omega_{vi}$ und eine kurvenäußere Radgeschwindigkeit $\omega_{va}$ zur Berechnung verwendet.

Darüber hinaus kann eine Fahrzeuggeschwindigkeit $v_x$ eines Fahrzeugs anhand der vier Radgeschwindigkeiten $\omega_{FL}$, $\omega_{FR}$, $\omega_{RL}$, $\omega_{RR}$ des Fahrzeugs und dem vorstehend berechneten Winkel $\delta_i$ eines kurveninneren, lenkbaren Rades des Fahrzeugs berechnet werden. Dazu werden geeignete Radgeschwindigkeiten $\omega_{FL}$, $\omega_{FR}$, $\omega_{RL}$, $\omega_{RR}$ anhand der Zustände einer Fahrsituation des Fahrzeugs, insbesondere Schleudern, Driften, Schwimmen, ESP-, ABS- oder Bremseingriffe ausgewählt. Dann werden diese wie nachfolgend beispielsweise für $\omega_{FL}$ dargestellt mit dem Kosinus

des Winkels $\delta_i$ multipliziert, um die Längsgeschwindigkeit $\omega_{XFL}$ zu erhalten (vgl. DE 195 37 791 A1):

$$\omega_{XFL} = \omega_{FL} \cdot cos(\delta_i).$$

Im folgenden soll die Erfindung anhand eines Ausführungsbeispiels hinsichtlich der Plausibilisierung und/oder Berechnung eines Ritzelwinkels dargestellt werden. Dabei wird beispielhaft von einer eingangs erwähnten Überlagerungslenkung ausgegangen. Die Erfindung ist selbstverständlich auch bei anderen Lenksystemen, wie z.B. Steer by Wire, etc., nach einer Erweiterung einsetzbar.

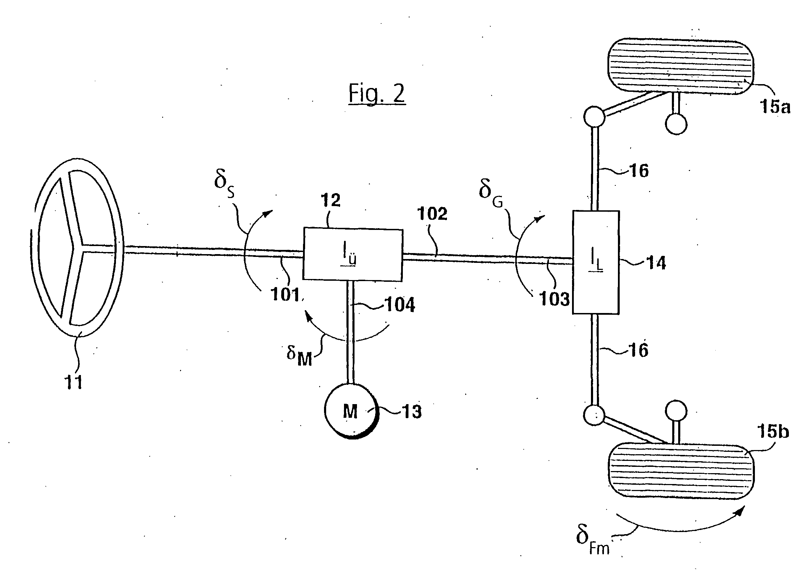

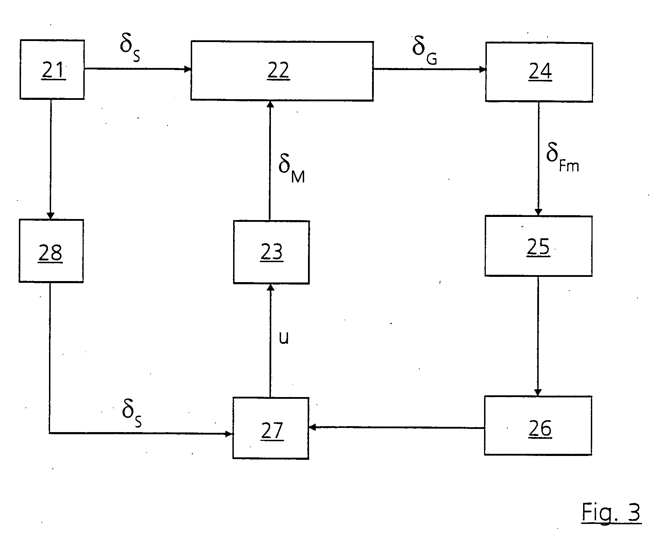

Die Fig. 2 bzw. Fig. 3 zeigt mit den Bezugszeichen 11 bzw. 21 ein von dem Fahrer des Fahrzeugs betätigbares Lenkrad. Durch die Betätigung des Lenkrades 11 bzw. 21 wird einem Überlagerungsgetriebe 12 bzw. 22 über eine Verbindung 101 ein Lenkradwinkel $\delta_S$ zugeführt. Gleichzeitig wird dem Überlagerungsgetriebe 12 bzw. 22 über eine Verbindung 104 ein Motorwinkel $\delta_M$ eines Stellantriebes 13 bzw. 23 zugeleitet, wobei der Stellantrieb als Elektromotor ausgebildet sein kann. Ausgangsseitig des Überlagerungsgetriebes 12 bzw. 22 wird die überlagerte Bewegung bzw. der Ritzelwinkel $\delta_G$ über eine Verbindung 102, 103 einem Lenkgetriebe 14 bzw. 24 zugeführt, das wiederum über ein Lenkgestänge 16 entsprechend der überlagerten Bewegung bzw. dem Gesamtwinkel $\delta_G$ lenkbare Räder 15a und 15b mit einem Lenkwinkel $\delta_{Fm}$ beaufschlagt. Die mechanische Übersetzung des Überlagerungsgetriebes 12 bzw. 22 für $\delta_M = 0$ ist mit $i_{\ddot{U}} = \delta_G/\delta_S$ und die mechanische Übersetzung des Lenkgetriebes 14 bzw. 24 mit dem Bezugszeichen $i_L$ bezeichnet.

Auf die lenkbar ausgelegten Räder 15a und 15b wirkt ein von der Straße beeinflusstes Reaktionsmoment $M_V$. In der Fig. 3 sind weiterhin Sensoren 26 und 28 zu sehen, wobei der Sensor 28 den Lenkradwinkel $\delta_S$ detektiert und einem Steuergerät 27 zuführt, während mit dem Bezugszeichen 26 Sensoren gekennzeichnet sind, die die Bewegungen des Fahrzeugs (bspw. Gierbewegungen, Querbeschleunigung, Radgeschwindigkeiten, Fahrzeuggeschwindigkeit $v_X$, usw.) und den Ritzelwinkel $\delta_G$ detektieren und entsprechende Signale dem Steuergerät 27 zuführen. Das Steuergerät 27 ermittelt, abhängig vom erfassten Lenkradwinkel $\delta_S$ und ggf. abhängig von den Fahrzeugbewegungen eine Stellgröße u zur Ansteuerung des Stellantriebs 13 bzw. 23 zur Realisierung von Nutzanwendungen (z. B. variable Lenkübersetzung). Die Signale der Sensoren 26 können auch einem CAN-Bussystem des Fahrzeugs entnommen werden.

Zwischen den in den Fig. 2 bzw. 3 dargestellten Winkeln gilt der bekannte Zusammenhang ($i_L$ ist eine nichtlineare Funktion):

$$i_L(\delta_{Fm}) = [\delta_S/i_{\ddot{U}} + \delta_M] \qquad (2)$$

Aufgrund der Sicherheitsanforderungen an das Lenksystem, ist ein Sicherheitskonzept mit Sicherheits- und Diagnosefunktionen, insbesondere, um zufällige Fehler in der Sensoren 26, 28, dem Steuergerät 27 selbst oder der Aktuatorik zu entdecken und geeignet zu reagieren, d. h. beispielsweise die Nutzanwendungen, insbesondere die variable Lenkübersetzung geeignet zu schalten und/oder entsprechende Ersatzmodi zu starten, unerlässlich. Die Eingangssignale des Steuergeräts 27, insbesondere $\delta_S$, $\delta_G$ und die fahrzeugspezifischen Daten der Sensoren 26, werden fortlaufend auf Plausibilität geprüft. Beispielsweise wäre es nachteilig, ein falsches Geschwindigkeitssignal $v_X$ des Fahrzeugs zu akzeptieren, da die variable Lenkübersetzung geschwindigkeitsabhängig variiert wird. Das Verfahren zum Betrieb des Lenksystems ist als Computerprogramm auf dem Steuergerät 27 realisiert.

Zur Plausibilisierung des Ritzelwinkeleingangssignals oder zur Berechnung des Ritzelwinkels $\delta_G$ kann nun, wie vorstehend dargelegt anhand des Zusammenhangs (1.10) der Winkel $\delta_i$ des Rades des Fahrzeugs bestimmt werden, wonach mittels einer vorgegebenen Lenkgeometrie von dem Winkel $\delta_i$ des kurveninneren lenkbaren Rades auf den Ritzelwinkel $\delta_G$ geschlossen wird.

Darüber hinaus ist es vorteilhaft, wenn Zustände einer Fahrsituation des Fahrzeugs, insbesondere Schleudern, Driften, Schwimmen, ESP-, ABS- oder weitere Bremseingriffe, bei der Plausibilisierung des Ritzelwinkeleingangssignals und/oder bei der Berechnung des Ritzelwinkels $\delta_G$ berücksichtigt werden.

**Patentansprüche**

1. Verfahren zur Berechnung eines Radwinkels ($\delta_i$) insbesondere eines kurveninneren lenkbaren Rades eines Fahrzeugs, über eine analytische Beziehung gemäß der Fahrzeuggeometrie, wobei Achsabstand (I), Spurweite ($S_{Lenk}$) sowie Radgeschwindigkeiten ($\omega_{vi,a}$) in nachstehender Weise verknüpft werden:

$$\delta_i = \arctan\left( \frac{-I \cdot \left( \omega_{Vi}^2 - \omega_{Va}^2 \right)}{S_{Lenk} \cdot \omega_{Vi}^2 + \sqrt{S_{Lenk}^2 \cdot \omega_{Vi}^2 \cdot \omega_{Va}^2 - I^2 \cdot \left( \omega_{Vi}^2 - \omega_{Va}^2 \right)^2}} \right)$$

wobei

$\delta_i$ Winkel eines vorderen kurveninneren Rades
$S_{Lenk}$ Spurweite
I Radstand des Fahrzeugs und
$\omega_{Vi}$ Radgeschw. des vorderen, innengelenkten Rades
$\omega_{Va}$ Radgeschw. des vorderen, aussengelenkten Rades

des Fahrzeuges repräsentiert.

2. Verfahren zum Betrieb eines Lenksystems für ein Fahrzeug mit wenigstens einem lenkbaren Rad (15), einem Stellantrieb (13;23) und einem Überlagerungsgetriebe (12;22), wobei durch das Überlagerungsgetriebe (12;22) die durch den Fahrer des Fahrzeugs initiierte Lenkbewegung ($\delta_S$) und die durch den Stellantrieb (13;23) initiierte Bewegung ($\delta_M$) zur Erzeugung der Lenkbewegung des lenkbaren Rades ($\delta_{Fm}$) zur Realisierung von Nutzanwendungen in einen Ritzelwinkel ($\delta_G$) überlagert werden, wobei
der Stellantrieb (13;23) zur Initiierung der Bewegung ($\delta_M$) durch ein Steuersignal (u) eines Steuergeräts (27) angesteuert wird und
das Steuergerät (27) zur Ermittlung des Steuersignals (u) den Lenkradwinkel ($\delta_S$), den Ritzelwinkel ($\delta_G$) und weitere fahrzeugspezifische Parameter, insbesondere eine Fahrzeuggeschwindigkeit ($v_x$) als Eingangssignale erhält,
wobei zur Plausibilisierung des Ritzelwinkeleingangssignals oder zur Berechnung des Ritzelwinkels ($\delta_G$) ein Radwinkel ($\delta_i$), insbesondere eines kurveninneren lenkbaren Rades des Fahrzeugs nach einem Verfahren gemäß Anspruch 1 bestimmt wird, wonach mittels einer vorgegebenen Lenkgeometrie von dem Radwinkel ($\delta_i$) auf den Ritzelwinkel ($\delta_G$) geschlossen wird.

3. Verfahren nach Anspruch 2, **dadurch gekennzeichnet, dass** Zustände einer Fahrsituation des Fahrzeugs, insbesondere Schleudern, Driften, Schwimmen, ESP-, ABS- oder Bremseingriffe, bei der Plausibilisierung des Ritzelwinkeleingangssignals und/oder bei der Berechnung des Ritzelwinkels ($\delta_G$) berücksichtigt werden.

4. Verfahren nach Anspruch 1, **dadurch gekennzeichnet, dass** zur Bestimmung einer Fahrzeuggeschwindigkeit ($v_X$) eines Fahrzeugs unter Anwendung einer Auswahl und/oder Gewichtung der Radgeschwindigkeiten ($\omega_{FL}$, $\omega_{FR}$, $\omega_{RL}$, $\omega_{RR}$) der Radwinkel ($\delta_i$) mit einbezogen wird.

5. Computerprogramm mit Programmcodemitteln, um ein Verfahren gemäß Anspruch 2 oder 3 durchzuführen, wenn dass Programm auf einem Computer insbesondere auf dem Steuergerät (27) des Lenksystems ausgeführt wird.

6. Steuergerät (27) für ein Lenksystem zur Ausführung eines Computerprogramms gemäß Anspruch 5.

Fig. 1

Fig. 2

EP 1 568 570 A2

Fig. 3